# EUROPEAN PATENT APPLICATION

(11) **EP 1 655 340 A1**
(43) Date of publication of application: **10.05.2006**
(21) Application number: 05077442.1
(22) Date of filing: 24.10.2005
(51) Int. Cl.: C08L 23/10, C08L 25/08, C08L 53/00, C08L 23/08, B29C 41/18

(54) **Slush moldable thermoplastic polyolefin formulation for interior skin**

(30) Priority: 05.11.2004 US 983010
(71) Applicant: Delphi Technologies, Inc., Troy, MI 48007 (US)
(72) Inventor: Kakarala, Srimannarayana, Bloomfield Hills, MI 48302 (US); Patel, Sandip R., Miamisburg, OH 45342 (US); Ellis, Thomas S., Romeo, MI 48065 (US)
(74) Representative: Denton, Michael John

(57) **Abstract**

A thermoplastic polyolefin composition suitable for slush molding comprising a blend of polypropylene, styrenic elastomer, linear low density polyethylene and a hydrocarbon-based process oil. Optional components include an ethylene copolymer elastomer, polymer additives such as polymer surface modifiers, powder flow additives, stabilizers and/or color pigments. The compositions exhibit a low melt viscosity during processing and improved surface quality for the molded article. An exemplary composition includes about 20-50 wt.% polypropylene or copolymer thereof, about 20-60 wt.% of a styrenic elastomer, about 5-50 wt.% linear low density polyethylene, and about 2-25 wt.% of a hydrocarbon-based process oil. The zero shear viscosity of the composition suitable for slush molding is in the range of about 300-900 Pa.s over a processing temperature range of 180-260°C.

## Description

### TECHNICAL FIELD

The present invention relates generally to thermoplastic polyolefin compositions for soft sheet applications and more specifically to thermoplastic polyolefin compositions for slush molding.

### BACKGROUND OF THE INVENTION

Thermoplastic polyolefin compositions are actively pursued as replacement materials for polyvinyl chloride based skin materials for the fabrication of many articles. In the automotive field, thermoplastic polyolefin compositions have been used for the fabrication of articles such as interior sheathing, including instrument panel skins, door panels, air bag covers and seat covers.

Many of the articles have surface appearances and designs having complex surface characteristics, such as contours and geometric technical grains, and may be produced in a slush molding process. However, the balance of material properties desired for a slush molding process is difficult to achieve with current thermoplastic polyolefin compositions. Current thermoplastic polyolefin compositions are often processed for prolonged time periods at extremely high temperatures to form a fused skin in a slush molding process. The material composition of such a typical thermoplastic polyolefin composition may degrade during processing which in turn may alter the material properties, such as the material strength and uniform fusion of the composition. As a result, articles produced using these thermoplastic polyolefin compositions may have unacceptable surface appearance and mechanical properties. To achieve suitability for slush molding without material property degradation, thermoplastic polyolefin compositions with a very low melt viscosity during the molding process are desired. Herein we refer to melt viscosity at any given temperature as that property measured at low shear rates, such as that defined by zero shear viscosity. The melt viscosity of the thermoplastic polyolefin compositions for use in slush molding should be in the range of 300 Pa.s to 900 Pa.s over the processing temperature range of 180°C to 260°C, as measured at a substantially low (near zero) shear rate applied by a parallel plate rheometer. The melt viscosity will be at or near the lower end of the range, e.g., 300-400 Pa.s, at process temperatures at or near the upper end of the processing temperature range. Conversely, the melt viscosity will be at or near the upper end of the range, e.g., 800-900 Pa.s, at process temperatures at or near the lower end of the processing temperature range. An exemplary thermoplastic polyolefin composition should have a zero shear viscosity of about 400-700 Pa.s at a molding temperature of 215°C.

One attempt to provide a thermoplastic polyolefin composition with a desirable low melt viscosity for use in slush molding is described in commonly owned and copending application Serial No. 10/234,552 to the same inventive entity herein. However, further improvement in the low melt viscosity, the surface quality, low temperature ductility, and tactile feel were still desirable.

Thus there is a need in the art for a thermoplastic polyolefin composition having a low melt viscosity at the molding temperature for use in slush molding. There is a further need for a thermoplastic composition having improved material properties, such as uniform melt fusion, during the slush molding process and low temperature ductility for improved airbag deployment performance. There is still further need to convert the composition into a suitable powder (avg. particle size in the range of 75 µm to 400 µm) and/or micropellet form, (avg. particle size in the range of 300 µm to 900 µm), with a good mechanical flow during the slush molding process. There is a further need in the art for a process for preparing such a composition for use in manufacturing automotive and non-automotive articles with improved surface characteristics like tactile feel and appearance.

### SUMMARY OF THE INVENTION

Described herein are thermoplastic polyolefin compositions and processes for preparing the composition, and articles of manufacture prepared from the composition. In one embodiment, a thermoplastic polyolefin composition is disclosed comprising a blend of about 20 weight percent (hereafter "wt.%") to about 50 wt.% polypropylene; about 20 wt.% to about 60 wt.% of a styrenic elastomer, such as a hydrocarbon-styrenic copolymer elastomer; about 5 wt.% to about 50 wt.% of a linear low density polyethylene (LLDPE); and about 2 wt.% to about 25 wt.% of a hydrocarbon-based processing oil. In an alternative embodiment, only one of the LLDPE and processing oil are included in the composition, rather than both components. The weight percent values disclosed are based on the weight of the total composition unless otherwise noted. The composition of the present invention advantageously has a zero shear viscosity of about 300-900 Pa.s over a processing temperature range of 180-260°C. In an exemplary embodiment, the composition has a zero shear viscosity of about 400-700 Pa.s at a processing temperature of 215°C, for example about 450-600 Pa.s.

In an alternative embodiment, the thermoplastic polyolefin composition further comprises up to about 40 wt.% ethylene copolymer elastomer. In another embodiment, the thermoplastic polyolefin composition comprises up to about 5 wt.% polymer additive, such as a polymer surface modifier. Polymer surface modifiers may be used to achieve specific properties such as scratch and mar resistance, and to improve melt flow properties by reducing the surface friction and enhancing the scratch resistance. In another embodiment, the thermoplastic polyolefin composition comprises up to about 10 wt.% powder flow additive, such as inorganic particulate. Suitable powder flow additive may include hydrated silicate such as talc and montmorillonite clay. In an additional embodiment, the thermoplastic polyolefin composition comprises up to about 4 wt.%, for example about 1 wt.% to about 4 wt.%, of heat and/or light stabilizers. In a further embodiment, the thermoplastic polyolefin composition comprises up to about 2 wt.%, for example about 1 wt.% to about 2 wt.%, color pigment. The stabilizers and color pigment are present in an amount effective to impart the desired color intensity and provide long-term durability to the composition and the molded article.

In another embodiment, molded articles of manufacture prepared with the present compositions are provided.

### BRIEF DESCRIPTION OF THE DRAWINGS

The present invention will now be described, by way of example, with reference to the accompanying drawings, in which:
FIG. 1 is a schematic depiction of a process of compounding a thermoplastic polyolefin composition to form a powder in accordance with the present invention; and
FIG. 2 is a schematic depiction of a process of in-line compounding of thermoplastic polyolefin compositions to form particles such as micropellets in accordance with the present invention.

### DESCRIPTION OF THE PREFERRED EMBODIMENTS

Described herein are thermoplastic polyolefin compositions and processes for preparing the same. The present invention also relates to articles of manufacture prepared from the compositions. To obtain a composition suitable for use in slush molding, a balancing of properties is required, which may be achieved via the present invention. In one embodiment, a thermoplastic polyolefin composition is disclosed comprising a blend of about 20 wt.% to about 50 wt.% polypropylene; about 20 wt.% to about 60 wt.% styrenic elastomer; and one or both of about 5 wt.% to about 50 wt.% of a linear low density polyethylene or about 2 wt.% to about 25 wt.% of a hydrocarbon-based processing oil. The melt viscosity of the thermoplastic polyolefin compositions for use in slush molding should be in the range of about 300 Pa.s to about 900 Pa.s over the processing temperature range of 180-260°C, as measured at a zero shear such as that applied by a parallel plate rheometer. In an exemplary embodiment, the melt viscosity is in the range of about 400-700 Pa.s at a processing temperature of 215°C. In a further exemplary embodiment, the melt viscosity is in the range of about 450-600 Pa.s at 215°C. High Melt Flow Index (as measured according to ASTM D1238) materials, for example with a Melt Flow Index (MFI) greater than about 10 grams/10 minutes (g/10 min) measured at 230°C employing a 2.16 kilogram (kg) weight (>10 g/10 min), are selected generally for the composition, and advantageously one or more compounds having a MFI greater than about 40 g/10 min and advantageously greater than 60g/10 min are selected to obtain low melt viscosity for the composition. Also, polymers are selected for blend compatibility and/or miscibility (mutual solubility) to provide compositions with the desired low melt viscosity and improved flow properties.

Unless otherwise indicated, all numbers expressing quantities of ingredients, properties such as molecular weight, reaction conditions, and so forth used in the specification and claims are to be understood as being modified in all instances by the term "about". Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements.

In an alternative embodiment of the present invention, the thermoplastic polyolefin composition further comprises up to about 40 wt.% ethylene copolymer elastomer. In another embodiment, the thermoplastic polyolefin composition further comprises up to about 5 wt.% polymer additive, such as polymer surface modifier. In an additional embodiment, the thermoplastic polyolefin composition further comprises up to 10 wt.% powder flow additive, such as inorganic particulate. Suitable powder flow additives may include a hydrated silicate such as talc and montmorillonite clay. In an additional embodiment, the thermoplastic polyolefin composition further comprises up to about 4 wt.%, for example about 1 wt.% to about 4 wt.%, of a heat stabilizer or a light stabilizer, or any combinations thereof. In another embodiment, the thermoplastic polyolefin composition further comprises up to about 2 wt.%, for example about 1 wt.% to about 2 wt.%, color pigment. Optionally, a light stabilizer, a UV absorber and other agents may be incorporated in an amount effective to enhance color retention with solar exposure during product service.

More specifically, the thermoplastic polyolefin composition of the present invention comprises about 20 wt.% to about 50 wt.%, for example about 25 wt.% to about 35 wt.%, polypropylene. The quantity and type of polypropylene is selected to provide desirable low melt viscosity, good ductility and good heat resistance to the composition. Suitable polypropylene includes, but is not limited to, crystalline polypropylene and is intended to include in addition to the homopolymer those copolymers that also contain minor amounts, usually not greater than about 15 wt.% based on the total weight of the copolymer, of other olefin monomers, for example ethylene, butene, octene and the like. Suitable polypropylene polymers have melt flow indices in the range of about 40 to about 1200 grams/10 minutes (g/10 min) measured at 230°C employing a 2.16 kilogram (kg) weight. In an exemplary embodiment, the polypropylene has a Melt Flow Index of about 60-1200 g/10 min. Selection of a polypropylene polymer having a Melt Flow Index below the specified range may result in or contribute to an unacceptably high melt viscosity for the composition, such that it would be unsuitable for slush molding.

The thermoplastic polyolefin composition of the present invention further comprises about 20 wt.% to about 60 wt.%, for example about 25 wt.% to about 45 wt.%, styrenic elastomer, usually in the form of random or block copolymer with a molecular styrene content below 50 wt.% based upon the total weight of the styrenic elastomer and the remainder being made up of saturated aliphatic hydrocarbon polymer or copolymer. The styrenic elastomer contributes to the ductility and soft tactile feel of the composition.

The thermoplastic polyolefin composition of the present invention may further comprise about 5 wt.% to about 50 wt.% of linear low density polyethylene (LLDPE), for example about 10 wt.% to about 35 wt.%. The LLDPE is an ethylene alpha-olefin copolymer with a minor amount of hexene or octane or the like. Suitable LLDPE polymers have melt flow indices in the range of about 40 to about 200 g/10 min measured at 230°C employing a 2.16 kg weight. The high melt flow rate of the LLDPE provides the thermoplastic polyolefin composition of the present invention with the desired lower viscosity. In addition, LLDPE contributes to an improved mechanical durability and to control of the soft tactile properties of the material.

The thermoplastic polyolefin composition of the present invention may further comprise about 2 wt.% to about 25 wt.% of a liquid hydrocarbon-based processing oil, for example about 5 wt.% to about 15 wt.%. The process oil comprises mainly paraffinic and naphthenic components. Suitable process oils have an average molecular weight (calculated from the kinematic viscosity per ASTM D2502) in the range of about 500 to about 1000. The molecular weight of the process oil should be selected to avoid migration from the composition in normal service use conditions. The process oil assists the development of the desired low viscosity in the composition of the present invention. In addition, the process oil contributes to an improvement in the low temperature ductility and the soft tactile properties of the material.

Thus, the composition of the present invention includes a mixture of polypropylene and a styrenic elastomer in combination with LLDPE or a hydrocarbon-based processing oil, or a combination thereof. The LLDPE and/or processing oil may be used, for example, to alter the viscosity of the mixture such that it falls within the range suitable for slush molding. Also, the addition of an LLDPE with a high MFI and/or the addition of the processing oil may enable the use of a lower MFI polypropylene, if desirable. Thus, the type and quantity of these components may be selected and altered to provide the ultimate desired properties for the composition and for the resulting molded article.

The thermoplastic polyolefin composition of the present invention may further comprise up to about 40 wt.%, for example about 15 wt.% to about 25 wt.%, ethylene copolymer elastomer, such as ethylene-based rubber. An ethylene copolymer will also contribute to good ductility and soft tactile feel. Suitable ethylene copolymer elastomers include, but are not limited to, ethylene-propylene, ethylene-butene, ethylene-octene, ethylene-pentene, ethylene-hexene copolymers and the like, as well as combinations comprising at least one of the forgoing ethylene copolymer elastomers, having glass transition temperatures of about down to -60°C or less. Other suitable ethylene copolymer elastomers include ethylene-propylene non-conjugated diene copolymer (EPDM). The non-conjugated dienes contain about 6 to about 22 carbon atoms and have at least one readily polymerized double bond. The ethylene-propylene copolymer elastomer contains about 60 wt.% to about 80 wt.%, usually about 65 wt.% to about 75 wt.% ethylene, based on the total weight of the EPDM. The amount of non-conjugated diene is generally about 1 wt.% to about 7 wt.%, usually about 2 wt.% to about 5 wt.%, based on the total weight of the EPDM. Preferably, the ethylene-propylene copolymer elastomer is EPDM copolymer. Suitable EPDM copolymers include, but are not limited to, ethylene-propylene-1,4 hexadiene, ethylene-propylene dicyclopentadiene, ethylene-propylene norbornene, ethylene-propylene-methylene-2-norbornene, and ethylene-propylene-1,4-hexadiene/norbornadiene copolymer.

The thermoplastic polyolefin composition of the present invention may further optionally comprise up to about 5 wt.% polymer additive, for example about 0.3 wt.% to about 2 wt.%. Suitable polymer additives include a polymer surface modifier to improve scratch resistance, such as fatty acid amides like oleamide and erucamide, and siloxane. In an exemplary embodiment, the thermoplastic polyolefin compositions may comprise up to about 5 wt.%, for example about 0.3% to about 2 wt.%, of polymer surface modifier. The use of a polymer surface modifier may be desirable where an improvement in scratch and mar resistance is desirable.

In an additional embodiment, the thermoplastic polyolefin composition of the present invention may further comprise up to 10 wt.%, for example about 3 wt.% to about 7 wt.%, powder flow additive, such as inorganic particulate. A suitable powder flow additive includes hydrated silicate such as talc and montmorillonite clay. The particle size range of the silicate should be in the range of about 1 to about 40 µm, for example about 1 to about 20 µm.

The thermoplastic polyolefin composition of the present invention can also optionally comprise one or more stabilizers, such as a heat stabilizer, a light stabilizer and the like, as well as combinations comprising at least one of the foregoing stabilizers, in an amount up to about 4 wt.%. Heat stabilizers include phenolics, hydroxyl amines, phosphates, and the like, as well as combinations comprising at least one of the foregoing heat stabilizers. Light stabilizers include low molecular weight (having number-average molecular weights less than about 1,000 AMU) hindered amines, high molecular weight (having number-average molecular weights greater than about 1,000 AMU) hindered amines, and the like, as well as combinations comprising at least one of the foregoing light stabilizers. Optionally, various additives known in the art may be used as needed to impart various properties to the composition, such as heat stability, stability upon exposure to ultraviolet wavelength radiation, long-term durability, and processability. The exact amount of stabilizer is readily empirically determined by the reaction employed and the desired characteristics of the finished article, and may be in the range of about 1 wt.% to about 4 wt.%, for example about 1 wt.% to about 3 wt.%.

Table 1 provides a list of components suitable for use in the thermoplastic compositions and examples discussed herein. It will be understood that the components listed in Table 1 are given for the purpose of illustration and do not limit the invention.

**TABLE 1**

| Component | Source | Trade Name |
|---|---|---|
| Polypropylene | Basell, Equistar, Exxon, Huntsman | Profax®, Valtec® Petrothene®, Escorene® |
| Ethylene Copolymer Rubber | DSM, DuPont Dow, Exxon | Keltan®, Engage® Exact® |
| Styrenic Copolymer Elastomer | JSR, Kraton, Kuraray | Dynaron®, Kraton® Septon® |
| LLDPE | Equistar, Dow, Huntsman | Petrothene®, LLDPE, REXall® |
| Process Oil | Chevron, Crompton | Paralux®, Hydrobrite® |
| Stabilizers | Ciba, Cytex, Great Lake Chemicals | Irganox®, Tinuvin® Cyanox®, Cyasorb® |
| Powder Flow Additives | Southern Clay Products, Nanocor | Cloisite®, Nanomer® |
| Polymer Surface Modifiers | Ciba, Croda, Dow Coming | Atmer®, Crodamide® UHMW Siloxane® |

The thermoplastic polyolefin composition of the present invention may further optionally comprise a color pigment or a combination of color pigments in an amount up to 2 wt.%. Suitable color pigments are known to those skilled in the art and the exact amount of color pigment is readily empirically determined based on the desired color characteristic of the formulation and the finished product, with about 1 wt.% to about 2 wt.% possible.

In an exemplary embodiment of the present invention, a thermoplastic polyolefin composition is provided that is suitable for slush mold processing, wherein the composition consists essentially of a blend of about 25-35 wt.% polypropylene or a copolymer thereof, about 25-45 wt.% styrenic elastomer, about 10-35 wt.% LLDPE, about 5-15 wt.% hydrocarbon-based process oil, up to about 40 wt.% ethylene copolymer, up to about 5 wt.% polymer surface modifier, up to about 10 wt.% powder flow additive, up to about 4 wt.% of one or more stabilizers, and up to about 2 wt.% color pigment. For this exemplary composition, the zero shear viscosity is in the range of about 300-900 Pa.s over a processing temperature range of 180-260°C, and the zero shear viscosity is in the range of 450-600 Pa.s at a processing temperature of 215°C. In a further exemplary embodiment, the ethylene copolymer is present in an amount of 15-25 wt.%. In another exemplary embodiment, one or more stabilizers are added in an amount of about 1-4 wt.%. In yet a further exemplary embodiment, the powder flow additive is added in an amount of about 3-7 wt.%. In another exemplary embodiment, the polymer surface modifier is present in an amount of about 0.3-2 wt.%.

The thermoplastic polyolefin composition may be prepared by melt blending the ingredients under high shear conditions, for example, using an internal mixer, such as Banbury type mixer, or by using a twin-screw extruder with screw elements selected to provide high shear for good distributive mixing of components. The resulting compositions may be processed further into smaller particles, such as pellets, micropellets, or powder, or any suitable form. The smaller particles of the compositions are particularly useful for slush molding to achieve uniform skin formation.

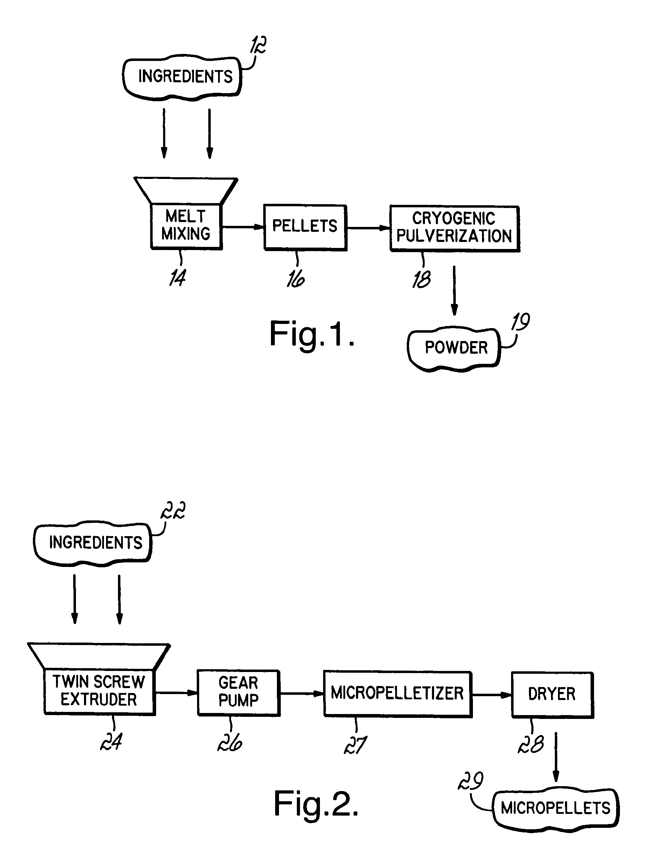

In one embodiment, as shown in FIG. 1, a process suitable for preparing the composition of the present invention comprises forming the thermoplastic polyolefin ingredients 12 into pellets 16 by melt mixing 14 the ingredients 12. Melt mixing 14 may be accomplished by using an extruder, such as a twin-screw extruder or an internal mixer, such as a Banbury type mixer. The pellets 16 may then undergo cryogenic pulverization 18 (pulverized at cryogenic temperature) to produce a powder 19, with an average particle size of about 75 to about 500 µm. Cryogenic pulverization 18 is a shearing/impact process that makes non-uniform particles. In an alternative embodiment, not shown herein, the process includes melt mixing the components using an extruder, such as a twin screw extruder, and further processing the resulting pellets 16 with an extruder, such as a single screw extruder, to produce micropellets.

In another embodiment, as shown in FIG. 2, a process suitable for preparing a composition of the present invention comprises forming micropellets 29 of the composition using a gear pump 26 as a means to achieve high backpressure from the twin-extruder 24 to the minibead die plate, which would eliminate a separate processing step. In this process 20, the ingredients 22 are melt compounded by in-line extrusion, using an extruder, such as a twin screw extruder 24 with a gear pump 26 to increase the melt pressure. The resulting composition is then formed into micropellets 29 of the composition in a micropellitizer 27. Micropellets 29 of the composition may be processed in a dryer 28, such as a centrifugal dryer.

Micropellets 29 of the composition may be larger spherical particles than cryoground powder 19 particles, usually measuring in the range of about 350 to about 900 µm. Slush molding can be achieved using either the cryoground powder 19, the micropellets 29 of the composition or combinations of the two for forming articles of manufacture therefrom. The surface quality of the molded article may be improved by optimizing the particle size and distribution.

The process of slush molding may be successful when the powder 19 and/or micropellets 29 possess good mechanical flow within the forming tool during the rotation cycle. This property of mechanical flow can be quantified by measuring the time to empty a cup with an orifice at the bottom and with specific volume. The improved flow can be achieved by the addition of suitable powder flow additive such as inorganic particulate. A suitable powder flow additive includes hydrated silicate such as talc and/or montmorillonite clay. The powder flow additive may comprise up to about 10 wt.%, for example about 3 wt.% to about 7 wt.%, of the total weight of the thermoplastic polyolefin composition. The particle size range of the silicate should be in the range of about 1 to about 40 µm, for example about 1 to about 20 µm. The powder flow additive may be added during the melt compounding or as a secondary process during cryogrinding or mechanical mixing of the powder 19 and/or micropellets 29 with the powder flow additive.

### EXAMPLES:

The following examples illustrate the present invention. It is understood that these examples are given for the purpose of illustration and do not limit the invention. In the examples, all parts and percentages are by weight based on the total weight of the composition unless otherwise specified. Example 1 (Comparative)

Composition A was prepared by melt mixing 14 using a twin-screw extruder and converted by cryogenic pulverization 18 into powder 19 using the scheme shown in FIG. 1. The composition of A, in weight percent of total composition, consists of about 40 wt.% polypropylene polymer and about 60 wt.% styrene copolymer elastomer.

The composition A had a measured zero shear viscosity of 1800 Pa.s (18000 Poise) at 215°C, which is considered to be too high for a suitable slush molding composition. The particular polypropylene selected in this Example had too low of a Melt Flow Index (35 g/10 min at 230°C and 2.16 kg), which contributed to the high melt viscosity. A suitable skin material could not be formed.

### Example 2 (Comparative)

Composition B was prepared by melt mixing using a twin-screw extruder 24 and converted to micropellets 29 using the scheme shown in FIG. 2. The composition of B, in weight percent of total composition, comprises about 60 wt.% polypropylene polymer and about 40 wt.% styrenic copolymer elastomer.

The composition B had a measured zero shear viscosity of 400 Pa.s (4000 Poise) at 215°C. The micropellets 29 had a measured flow of 27 seconds in a "Cup No. 5". The slush molded skin had inferior surface quality characterized by incomplete surface grain pattern, unacceptable pinholes, and incompletely fused rough back surface. In this example, the poor surface quality may be attributed to the high polypropylene content and the large particle size of the micropellets 29. However, the polypropylene selected had a Melt Flow Index of 100 g/10 min at 230°C and 2.16 kg, which is in the desirable range of about 60 to about 1200 g/10 min, thereby enabling the low melt viscosity for the composition.

### Example 3 (Comparative)

Composition C was prepared by melt mixing 14 using a twin-screw extruder and converted by cryogenic pulverization 18 into powder 19 using the scheme shown in FIG. 1 and also converted to micropellets using the scheme shown in FIG. 2. The composition of C, in weight percent of total composition, comprises about 60 wt.% polypropylene polymer and about 40 wt.% styrenic copolymer elastomer.

The composition C had a measured zero shear viscosity of 400 Pa.s (4000 Poise) at 215°C. The micropellets 29 had a measured flow of 27 seconds in a "Cup No. 5". The slush molded skin made only from micropellets 29 had inferior surface quality characterized by incomplete surface grain pattern, unacceptable pinholes, and incompletely fused rough back surface. Mixtures of the micropellets 29 and powder 19 in the composition with ranges of about 20 wt.% to about 80 wt.% of the micropellets 29 produced skin with improved surface quality and reduced pinholes. Thus, use of smaller particles may improve the surface quality. However, the durability of the composition is still unsatisfactory, which is likely attributable to the high polypropylene content.

### Example 4 (Comparative)

Composition D was prepared by melt mixing 14 using a twin-screw extruder and converted by cryogenic pulverization 18 into powder 19 using the scheme shown in FIG. 1. The composition of D, in weight percent of total composition, comprises about 40 wt.% polypropylene, about 30 wt.% ethylene copolymer elastomer, and about 30 wt.% styrene copolymer elastomer.

To this composition was also added about 2 wt.% of polymer surface modifiers and about 4 wt.% of a color concentrate consisting of stabilizers and colorants. The final composition D had a measured zero shear viscosity of 743 Pa.s (7430 Poise) at 215°C. The slush molded skin had inferior surface quality characterized by unacceptable pinholes. The zero shear viscosity is above the exemplary range of 400-700 Pa.s for a 215°C processing temperature, which negatively affects the durability of the composition and consequently the surface quality.

Using the Ford 5-Finger Test for Unpainted Slush Molded Samples, with a 1 mm tip and applied loads of 2 to 7N, the skin had a scratch resistance rating of 1. This rating corresponds to no visible scratch marks.

### Example 5 (Comparative)

Composition E was prepared by melt mixing 14 using a twin-screw extruder and converted by cryogenic pulverization 18 into powder 19 using the scheme shown in FIG. 1. The composition of E, in weight percent of total composition, comprises about 30 wt.% polypropylene, about 40 wt.% ethylene copolymer elastomer, and about 30 wt.% styrene copolymer elastomer.

To this composition was also added about 2 wt.% of polymer surface modifier and about 4 wt.% of a color concentrate consisting of stabilizers and colorants. To the powder 19 was added about 4 wt.% of a hydrated silicate. The resulting powder had a measured flow of 6 seconds in a "Cup No. 5".

The final composition E had a measured zero shear viscosity of 650 Pa.s (6500 Poise) at 215°C. The surface quality of a slush-molded skin was found to be good with minimal surface pinholes.

Using the Ford 5-Finger Test for Unpainted Slush Molded Samples, with a 1 mm tip and applied loads of 2 to 7N, the skin had a scratch resistance rating ranging from 1-2. This rating corresponds to no visible or a slight scratch mark. Composition E displayed significantly improved properties over the other examples, but improvement was still needed in the surface quality and viscosity of the composition.

### Example 6 (Comparative)

Composition F was prepared by melt mixing 14 using a twin-screw extruder and converted by cryogenic pulverization 18 into powder 19 using the scheme shown in FIG. 1. The composition of F, in wt.% of total composition, consists of about 40 wt.% polypropylene polymer and about 60 wt.% styrene copolymer elastomer. Thus, composition F uses the same quantities of components as Example A. However, the polypropylene in composition F had a Melt Flow Index of 45 g/10 min at 230°C and 2.16 kg.

Composition F had a measured zero shear viscosity of 1480 Pa.s at 215°C, which although lower than composition A, is still considered high for a slush molding composition. In addition, composition F had a glass transition temperature of -32°C.

### Example 7

Composition G was prepared by melt mixing 14 using a twin-screw extruder and converted by cryogenic pulverization 18 into powder 19 using the scheme shown in FIG. 1. The composition of G, in wt.% of total composition, consists of the same components used in composition F, namely about 40 wt.% polypropylene polymer (45 g/10 min MFI) and about 60 wt.% styrene copolymer elastomer. Composition G further contained 10 parts of process oil per 100 parts of resin.

Composition G had a measured zero shear viscosity of 405 Pa.s at 215°C, which is considered suitable for a slush molding composition. Thus, the viscosity of the composition can be significantly altered by the addition of the process oil in accordance with the present invention. In addition, composition G had a lower glass transition temperature of -34°C.

### Example 8 (Comparative)

Composition H was prepared by melt mixing 14 using a twin-screw extruder and converted by cryogenic pulverization 18 into powder 19 using the scheme shown in FIG. 1. The composition of H, in wt.% of total composition, consists of about 30 wt.% polypropylene polymer and about 70 wt.% styrene copolymer elastomer.

Composition H had a measured zero shear viscosity of 1190 Pa.s at 215°C, which is considered high for a slush molding composition.

### Example 9

Composition I was prepared by melt mixing 14 using a twin-screw extruder and converted by cryogenic pulverization 18 into powder 19 using the scheme shown in FIG. 1. The composition of I, in wt.% of total composition, consists of about 30 wt.% polypropylene polymer, about 30 wt.% LLDPE, and about 40 wt.% styrene copolymer elastomer. Specifically, the same components used in composition H were used for composition I, but with 30% of the styrene elastomer replaced by the 30% LLDPE.

Composition I had a measured zero shear viscosity of 750 Pa.s at 215°C, which is considered suitable for a slush molding composition. Thus, the viscosity of the composition can be significantly altered by substituting part of one or both of the styrene elastomer polypropylene with LLDPE.

### Example 10

Composition J was prepared by melt mixing 14 using a twin-screw extruder and converted by cryogenic pulverization 18 into powder 19 using the scheme shown in FIG. 1. The composition of J, in wt.% of total composition, consists of about 30 wt.% polypropylene polymer, about 50 wt.% styrene copolymer elastomer, and about 20 wt.% LLDPE. Composition J further contained 7.5 parts of process oil per 100 parts of resin.

Composition J had a measured zero shear viscosity of 550 Pa.s at 215°C, which is considered suitable for a slush molding composition. In addition, composition J had a glass transition temperature of -33°C, which is considered suitable for automotive interior skin applications. The surface quality of a slush-molded skin made from Composition J was found to be good with minimal surface pinholes.

Using the Ford 5-Finger test for unpainted slush molded samples, with a 1 mm tip and applied loads of 2-7N, the skin formed from composition J had a scratch resistance rating of 1, which corresponds to no visible scratch marks. Thus, the addition of the LLDPE and process oil to the polypropylene and styrene copolymer elastomer mixture achieved a melt viscosity of an exemplary value for slush molding while also achieving good scratch and mar resistance for the molded skin. In other words, the composition of the present invention achieves a balance of material properties required for the slush molding process that is heretofore been difficult to achieve in thermoplastic polyolefin compositions, namely a low zero shear viscosity, good surface appearance, good green strength for demolding, uniform fusion to minimize pinholes, and good ductility at low temperature for airbag deployment.

In forming a composition of the present invention, the type and quantity of polypropylene, styrenic elastomer, LLDPE, ethylene copolymer elastomer and process oil are selected to achieve a balance of properties for the melted composition and for the resulting skin material. By following the teachings herein, one skilled in the art can achieve a composition with a suitable melt viscosity for slush molding and a molded skin that is substantially free of surface pinholes and that has a scratch resistance rating of 1-2, and advantageously 1.

The embodiments of the present compositions, process and articles made therefrom, although primarily described in relation to vehicle application such as interior sheathing, including instrument panel skins, door panels, air bag covers roof liners and seat covers, can be utilized in numerous automotive and non-automotive applications.

While the present invention has been illustrated by the description of one or more embodiments thereof, and while the embodiments have been described in considerable detail, they are not intended to restrict or in any way limit the scope of the appended claims to such detail. Additional advantages and modifications will readily appear to those skilled in the art. The invention in its broader aspects is therefore not limited to the specific details, representative apparatus and method and illustrative examples shown and described. Accordingly, departures may be made from such details without departing from the scope or spirit of the general inventive concept.

## Claims

1. A thermoplastic polyolefin composition suitable for slush mold processing, comprising a blend of, on the basis of 100 parts by weight:
about 20-50 wt.% polypropylene or copolymer thereof,
about 20-60 wt.% styrenic elastomer, and
about 5-50 wt.% linear low density polyethylene,
wherein the composition has a zero shear viscosity of about 300-900 Pa.s over a processing temperature range of 180-260°C.

2. The thermoplastic polyolefin composition of claim 1 further comprising up to about 40 wt.% ethylene copolymer.

3. The thermoplastic polyolefin composition of claim 1 further comprising up to about 5 wt.% polymer surface modifier.

4. The thermoplastic polyolefin composition of claim 1 further comprising up to about 10 wt.% powder flow additive.

5. The thermoplastic polyolefin composition of claim 4 wherein the powder flow additive is one of inorganic particulate, hydrated silicate, talc, or montmorillonite clay, or a combination thereof.

6. The thermoplastic polyolefin composition of claim 1 further comprising about 1 wt.% to about 4 wt.% of a heat stabilizer or a light stabilizer, or a combination thereof.

7. The thermoplastic polyolefin composition of claim 1 wherein the polypropylene is a propylene-olefin copolymer comprising up to 15 wt.% olefin based on the total weight of the propylene-olefin copolymer.

8. The thermoplastic polyolefin composition of claim 1 wherein the polypropylene has a Melt Flow Index in the range of about 40 to about 1200 g/10 min measured at 230°C with a 2.16 kg weight.

9. The thermoplastic polyolefin composition of claim 1 wherein the styrenic elastomer comprises a saturated aliphatic hydrocarbon-styrene copolymer having a molecular styrene content below 50 wt.% based on the total weight of the styrenic elastomer.

10. The thermoplastic polyolefin composition of claim 1 wherein the polypropylene or copolymer thereof is present in an amount of about 25-35 wt.%.

11. The thermoplastic polyolefin composition of claim 1 wherein the styrenic elastomer is present in an amount of about 25-45 wt.%.

12. The thermoplastic polyolefin composition of claim 1 wherein the linear low density polyethylene is present in an amount of about 10-35 wt.%.

13. The thermoplastic polyolefin composition of claim 1 wherein the composition has a zero shear viscosity of about 400-700 Pa.s at a processing temperature of 215°C.

14. The thermoplastic polyolefin composition of claim 1 wherein the composition has a zero shear viscosity of about 450-600 Pa.s at a processing temperature of 215°C.

15. A thermoplastic polyolefin composition suitable for slush mold processing, comprising a blend of, on the basis of 100 parts by weight:
about 20-50 wt.% polypropylene or copolymer thereof,
about 20-60 wt.% styrenic elastomer, and
about 2-25 wt.% hydrocarbon-based process oil,
wherein the composition has a zero shear viscosity of about 300-900 Pa.s over a processing temperature range of 180-260°C.

16. The thermoplastic polyolefin composition of claim 15 further comprising up to about 40 wt.% ethylene copolymer.

17. The thermoplastic polyolefin composition of claim 15 further comprising up to about 5 wt.% polymer surface modifier.

18. The thermoplastic polyolefin composition of claim 15 further comprising up to about 10 wt.% powder flow additive.

19. The thermoplastic polyolefin composition of claim 18 wherein the powder flow additive is one of inorganic particulate, hydrated silicate, talc, or montmorillonite clay, or a combination thereof.

20. The thermoplastic polyolefin composition of claim 15 further comprising about 1 wt.% to about 4 wt.% of a heat stabilizer or a light stabilizer, or a combination thereof.

21. The thermoplastic polyolefin composition of claim 15 wherein the polypropylene is a propylene-olefin copolymer comprising up to 15 wt.% olefin based on the total weight of the propylene-olefin copolymer.

22. The thermoplastic polyolefin composition of claim 15 wherein the polypropylene has a Melt Flow Index in the range of about 40 to about 1200 g/10 min measured at 230°C with a 2.16 kg weight.

23. The thermoplastic polyolefin composition of claim 15 wherein the styrenic elastomer comprises a saturated aliphatic hydrocarbon-styrene copolymer having a molecular styrene content below 50 wt.% based on the total weight of the styrenic elastomer.

24. The thermoplastic polyolefin composition of claim 15 wherein the polypropylene or copolymer thereof is present in an amount of about 25-35 wt.%.

25. The thermoplastic polyolefin composition of claim 15 wherein the styrenic elastomer is present in an amount of about 25-45 wt.%.

26. The thermoplastic polyolefin composition of claim 15 wherein the hydrocarbon-based process oil is present in an amount of about 5-15 wt.%.

27. The thermoplastic polyolefin composition of claim 15 wherein the composition has a zero shear viscosity of about 400-700 Pa.s at a processing temperature of 215°C.

28. The thermoplastic polyolefin composition of claim 15 wherein the composition has a zero shear viscosity of about 450-600 Pa.s at a processing temperature of 215°C.

29. A thermoplastic polyolefin composition suitable for slush mold processing, comprising a blend of, on the basis of 100 parts by weight:
about 20-50 wt.% polypropylene or copolymer thereof,
about 20-60 wt.% styrenic elastomer,
about 5-50 wt.% linear low density polyethylene, and
about 2-25 wt.% hydrocarbon-based process oil,
wherein the composition has a melt viscosity of about 300-900 Pa.s over a processing temperature range of 180-260°C.

30. The thermoplastic polyolefin composition of claim 29 further comprising up to about 40 wt.% ethylene copolymer.

31. The thermoplastic polyolefin composition of claim 29 further comprising up to about 5 wt.% polymer surface modifier.

32. The thermoplastic polyolefin composition of claim 29 further comprising up to about 10 wt.% powder flow additive.

33. The thermoplastic polyolefin composition of claim 32 wherein the powder flow additive is one of inorganic particulate, hydrated silicate, talc, or montmorillonite clay, or a combination thereof.

34. The thermoplastic polyolefin composition of claim 29 further comprising about 1 wt.% to about 4 wt.% of a heat stabilizer or a light stabilizer, or a combination thereof.

35. The thermoplastic polyolefin composition of claim 29 wherein the polypropylene is a propylene-olefin copolymer comprising up to 15 wt.% olefin based on the total weight of the propylene-olefin copolymer.

36. The thermoplastic polyolefin composition of claim 29 wherein the polypropylene has a Melt Flow Index in the range of about 40 to about 1200 g/10 min measured at 230°C with a 2.16 kg weight.

37. The thermoplastic polyolefin composition of claim 29 wherein the styrenic elastomer is a hydrocarbon-styrene copolymer having a molecular styrene content below 50 wt.% based on the total weight of the styrenic elastomer, the balance being a saturated aliphatic hydrocarbon polymer or copolymer.

38. The thermoplastic polyolefin composition of claim 29 wherein the polypropylene or copolymer thereof is present in an amount of about 25-35 wt.%.

39. The thermoplastic polyolefin composition of claim 29 wherein the styrenic elastomer is present in an amount of about 25-45 wt.%.

40. The thermoplastic polyolefin composition of claim 29 wherein the linear low density polyethylene is present in an amount of about 10-35 wt.%.

41. The thermoplastic polyolefin composition of claim 29 wherein the hydrocarbon-based process oil is present in an amount of about 5-15 wt.%.

42. The thermoplastic polyolefin composition of claim 29 wherein the composition has a zero shear viscosity of about 400-700 Pa.s at a processing temperature of 215°C.

43. The thermoplastic polyolefin composition of claim 29 wherein the composition has a zero shear viscosity of about 450-600 Pa.s at a processing temperature of 215°C.

44. A thermoplastic polyolefin composition suitable for slush mold processing, consisting essentially of a blend of, on the basis of 100 parts by weight:
about 25-35 wt.% polypropylene or copolymer thereof,
about 25-45 wt.% styrenic elastomer,
about 10-35 wt.% linear low density polyethylene,
about 5-15 wt.% hydrocarbon-based process oil,
up to about 40 wt.% ethylene copolymer,
up to about 5 wt.% polymer surface modifier,
up to about 10 wt.% powder flow additive,
up to about 4 wt.% of a heat stabilizer or a light stabilizer, or a combination thereof, and
up to about 2 wt.% color pigment,
wherein the composition has a zero shear viscosity of about 300-900 Pa.s over a processing temperature range of 180-260°C and a zero shear viscosity of about 450-600 Pa.s at a processing temperature of 215°C.

45. The thermoplastic polyolefin composition of claim 44 wherein the ethylene copolymer is present in an amount of about 15-25 wt.%.

46. The thermoplastic polyolefin composition of claim 44 wherein the polymer surface modifier is present in an amount of about 0.3-2 wt.%.

47. The thermoplastic polyolefin composition of claim 44 wherein the powder flow additive is present in an amount of about 3-7 wt.%.

48. The thermoplastic polyolefin composition of claim 47 wherein the powder flow additive is one of inorganic particulate, hydrated silicate, talc, or montmorillonite clay, or a combination thereof.

49. The thermoplastic polyolefin composition of claim 44 wherein the stabilizers are present in an amount of about 1 wt.% to about 4 wt.%.

50. The thermoplastic polyolefin composition of claim 44 wherein the color pigment is present in an amount of about 1 wt.% to about 2 wt.%.

51. The thermoplastic polyolefin composition of claim 44 wherein the polypropylene is a propylene-olefin copolymer comprising up to 15 wt.% olefin based on the total weight of the propylene-olefin copolymer.

52. The thermoplastic polyolefin composition of claim 44 wherein the polypropylene has a Melt Flow Index in the range of about 40 to about 1200 g/10 min measured at 230°C with a 2.16 kg weight.

53. The thermoplastic polyolefin composition of claim 44 wherein the styrenic elastomer comprises a saturated aliphatic hydrocarbon-styrene copolymer having a molecular styrene content below 50 wt.% based on the total weight of the styrenic elastomer.

54. A molded article made from the composition of claim 1.

55. A molded article made from the composition of claim 15.

56. A molded article made from the composition of claim 29.

57. A molded article made from the composition of claim 44.
